# EUROPÄISCHE PATENTSCHRIFT

(11) **EP 3 869 785 B1**
(45) Veröffentlichungstag und Bekanntmachung des Hinweises auf die Patenterteilung: **27.05.2026**
(21) Anmeldenummer: 20159008.0
(22) Anmeldetag: 24.02.2020
(51) Int. Cl.: G11B 27/32, H04N 23/698, G08G 1/14

(54) **VORRICHTUNG ZUM AUFNEHMEN VON DATEN ZUM ERZEUGEN EINES VERORTETEN STRASSENZUGPANORAMABILDES UND VERFAHREN HIERZU**
DEVICE FOR RECORDING DATA FOR GENERATING A LOCAL STREET PANORAMA IMAGE AND METHOD FOR SAME
DISPOSITIF DE COLLECTE DE DONNÉES PERMETTANT DE GÉNÉRER UNE IMAGE PANORAMIQUE DE LA RUE ENTIÈRE LOCALISÉE ET PROCÉDÉ ASSOCIÉ

(43) Veröffentlichungstag der Anmeldung: 25.08.2021
(73) Patentinhaber: Parkling GmbH, 10965 Berlin (DE)
(72) Erfinder: FRETTER, Christoph, 12435 Berlin (DE)
(74) Vertreter: Wunderlich & Heim Patentanwälte PartG mbB

(56) Entgegenhaltungen:
- ANONYMOUS: "Virb Series Owner's Manual", 14 May 2014 (2014-05-14), XP055738495, Retrieved from the Internet <URL:http://static.garmin.com/pumac/VIRB_OM_EN.pdf> [retrieved on 20201009]
- ANONYMOUS: "Precision GPS Time Video Overlay Unit", 13 April 2017 (2017-04-13), XP055738497, Retrieved from the Internet <URL:https://www.blackboxcamera.com/pic-osd/docs/GPSBOXSPRITE.pdf> [retrieved on 20201009]
- ANONYMOUS: "Linear timecode - Wikipedia", 4 August 2019 (2019-08-04), XP055738488, Retrieved from the Internet <URL:https://en.wikipedia.org/w/index.php?title=Linear_timecode&oldid=909352895> [retrieved on 20201009]
- ANONYMOUS: "Google's Street View Cameras - More Than Meets the Eye", 20 December 2019 (2019-12-20), XP055738507, Retrieved from the Internet <URL:https://www.trekview.org/blog/2019/google-street-view-cameras-more-than-meets-the-eye/> [retrieved on 20201009]

## Beschreibung

Die Erfindung betrifft eine Vorrichtung zum Aufnehmen von Daten zum Erzeugen eines verorteten Straßenzugpanoramabildes mit einer Kamera und einer Einrichtung zur satellitenbasierten Positions- und Zeitbestimmung. Ferner weist die Vorrichtung eine Speichereinheit auf.

Des Weiteren betrifft die Erfindung ein Verfahren zum Aufnehmen von Daten zum Erzeugen eines verorteten Straßenzugpanoramabildes.

Durch die Zunahme der Bevölkerung in städtischen Gebieten nimmt der Verkehr, insbesondere auch der Individualverkehr mit Pkws, zu. Gerade im innerstädtischen Bereich führt diese massive Zunahme der Verkehrsdichte zu Problemen, die einen Mangel an Platzangebot zur Folge haben, der nicht mehr mit einfachen Mitteln gelöst werden kann. Weitere Probleme sind die damit einhergehende Lärmbelästigung durch den Verkehr aber auch die mittlerweile immer kritischer gesehene Belastung durch Schadstoffe.

Studien haben gezeigt, dass ca. 30% des innerstädtischen Verkehrs kein klassischer Beförderungsverkehr ist, sondern auf Fahrzeuge zurückzuführen ist, die auf Parkplatzsuche sind.

Hochrechnungen auf Deutschland ergeben, dass hierbei 1,9 Milliarden Stunden für die Parkplatzsuche aufgewendet werden. Hierbei werden 3,2 Milliarden Liter Treibstoff verbraucht. Insgesamt geht man von einem volkswirtschaftlichen Verlust in Höhe von 40,4 Milliarden EUR aus.

Der Wunsch nach einem Parkraummanagement, der diesen Verkehr zur Parkplatzsuche reduziert, ist daher in zunehmendem Maße gegeben.

Bei derartigen Systemen wird grundsätzlich von zwei Zuständen der Datenermittlung unterscheiden. Zum einen müssten statische Daten beschafft werden, aus denen hervorgeht, wo Parkplätze sind, zu welchen Zeiten man an diesen Parkplätzen parken darf, aber auch Informationen, wie die Parkplätze zu beparken sind, beispielsweise als Längsparker oder Querparker. Dies beinhaltet auch Informationen über Parkverbotszonen sowie eventuelle Preise für das Parken. Derartige Daten werden als statische Daten bezeichnet und stellen die Grundvoraussetzung für ein Parkraummanagement dar.

Der zweite Zustand der Datenermittlung ist das Ermitteln von sogenannten dynamischen Daten, welche Informationen über die aktuelle Parkplatzbelegungssituation darstellen.

Eine Möglichkeit, um statische Daten zu ermitteln ist beispielsweise aus der DE 10 2018 214 510 A1 bekannt. Hierbei können jedoch nur Informationen zum Freisein eines Parkplatzes oder nicht ermittelt werden. Daten, zu welchen Zeiten das Parken erlaubt ist oder ob es sich beispielsweise um eine Einfahrt handelt, können nur schwer festgestellt werden.

Einerseits ist es beispielsweise aus Google Street View bekannt, mittels Fahrzeugen georeferenzierte Rundum - also 360°-Bilder - von verschiedenen Positionen in einer Straße zu erzeugen. Allerdings reichen derartige Daten nicht aus, um ausreichend Informationen zu generieren, welche zum Berechnen von statischen Parkplatzdaten notwendig sind. Beispielsweise können die Positionen von einzelnen gestatteten Parkplätzen gar nicht oder nur schwer ermittelt werden. In ähnlicher Weise sind oft auch Daten zu erlaubten Parkzeiten und dergleichen nicht sichtbar.

Eine weitere Herausforderung besteht darin, die erzeugten Bilder für ein verortetes Straßenzugpanoramabild mit den entsprechenden Ortsinformationen zu versehen. Werden analog zu Google Street View einzelne Bilder erstellt, ist dies meist unproblematisch möglich. Sobald jedoch zeitlich naheliegende Bilder in einem kontinuierlichen Verfahren erstellt werden sollen, so entstehen hierbei deutliche Probleme, da eine hochgenaue Genauigkeit der Ortsinformation gefordert ist.

Im Handbuch für eine Garmin Virb-Kamera ("Virb Series Owner's Manual", 14. Mai 2014 (2014-05-14),Gefunden im Internet:URL:http://static.garmin.com/pumac/VIRB_OM_EN.pdf) wird eine Vorrichtung zum Aufnehmen von Daten zum Erzeugen eines verorteten Straßenzugpanoramabildesmit einer Kamera beschrieben.

Der Erfindung liegt daher die **Aufgabe** zugrunde, eine Vorrichtung und ein Verfahren zum Aufnehmen von Daten zum Erzeugen eines verorteten Straßenzugpanoramabildes anzugeben, welches eine besondere Ortsgenauigkeit aufweist.

Diese Aufgabe wird erfindungsgemäß durch eine Vorrichtung mit den Merkmalen des Anspruchs 1 sowie ein Verfahren mit den Merkmalen des Anspruchs 9 gelöst.

Vorteilhafte Ausführungsformen der Erfindung sind in den Unteransprüchen, in der Beschreibung sowie in den Figuren und deren Erläuterung angegeben.

Die erfindungsgemäße Vorrichtung weist eine Aufbereitungseinrichtung auf, welche ausgebildet ist, Zeitdaten der Einrichtung zur satellitenbasierten Positions- und Zeitbestimmung in ein für die Kamera aufnehmbares Format als codierte Zeitdaten aufzubereiten und an die Kamera zur Aufnahme weiterzuleiten. Ferner ist die Kamera zum zeitgleichen Aufnehmen eines kontinuierlichen Films und der codierten Zeitdaten als Film mit Zeitdaten ausgebildet. Die Speichereinheit wiederum ist zum Abspeichern des Films mit den Zeitdaten sowie zum Abspeichern von Positions- und Zeitdaten der Einrichtung zur satellitenbasierten Positions- und Zeitbestimmung ausgebildet und eingerichtet.

Der Erfindung liegen mehrere miteinander in Kombination wirkende Ideen zugrunde. Zum einen wurde erkannt, dass es für ein ausreichend genaues Straßenzugpanoramabild, welches zur Ermittlung von statischen Daten für ein Parkplatzmanagement verwendet werden kann, nicht ausreichend ist beziehungsweise nicht effizient genug ist, einzelne Standbilder aufzunehmen. Daher wird entsprechend der Erfindung ein kontinuierlicher Film erzeugt. Dieser wird beim Abfahren eines Straßenzuges beispielsweise mit einem Fahrzeug aufgenommen.

Zum anderen wurde weiterhin erkannt, dass es nicht oder nur mit unverhältnismäßig hohem Aufwand möglich ist, die Positionsdaten der Einrichtung zur satellitenbasierten Positions- und Zeitbestimmung mit dem Film zu verknüpfen. Insbesondere müsste dies in einer genauen Art und Weise erfolgen, so dass sich kein ungewollter Offset zwischen den Positionsdaten und den Bildern des Filmes entsteht.

Um dieses Problem zu lösen, wird entsprechend der Erfindung von der Aufbereitungseinrichtung die Zeit beziehungsweise ein Zeitsignal, welche von der Einrichtung zur satellitenbestimmten Positions- und Zeitbestimmung stammt, in ein für die Kamera aufnehmbares Format aufbereitet und an die Kamera weitergeleitet. Die Kamera nimmt diese Zeitdaten als aufbereitetes Zeitformat, welches im Folgenden als codierte Zeitdaten bezeichnet wird, zusammen mit den eigentlichen bildlichen Filmdaten auf. Dies führt dazu, dass die entsprechenden codierten Zeitdaten, welche einen Zeitpunkt bezeichnen, genau mit dem Bild verbunden sind, zu dem auch die entsprechenden Positionsdaten der Einrichtung zur satellitenbasierten Positions- und Zeitbestimmung ermittelt wurden.

Abschließend wird entsprechend der Erfindung, zum einen der Film mit den codierten Zeitdaten und die von der Einrichtung zur satellitenbasierten Positions- und Zeitbestimmung stammenden Positions- und Zeitdaten auf der Speichereinheit gespeichert.

In einer nachgeschalteten Auswertung kann so über die codierten Zeitdaten im Film und die Zeitdaten, welche mit den Positionsdaten verknüpft sind, die exakte Position jedes Bildes des Films ermittelt werden.

Bei der Einrichtung zur satellitenbasierten Positions- und Zeitbestimmung kann es sich beispielsweise um eine Einrichtung nach dem GPS-, Galileo-, Glonas- und/oder Beidou-Standard oder eine Kombination derer handeln.

In einer bevorzugten Ausführungsform ist die Aufbereitungseinheit zum Erzeugen der codierten Zeitdaten ausgelegt, die codierten Zeitdaten als akustisches Signal aufzuarbeiten und auszugeben sowie an die Kamera weiterzuleiten. Auf diese Art und Weise kann ein zweiter separat zu den Bilddaten bei einem Standardfilm vorhandene Kanal verwendet werden, um die Daten aufzuzeichnen. Grundsätzlich wäre es auch möglich, ein zusätzliches Bildsignal in die Kamera einzuspielen, wobei dann ein entsprechendes Überlagern der externen Bilder, welche aufgezeichnet werden sollen, mit dem zweiten Bildsignal notwendig wäre, was zum einen kompliziert ist und zum anderen auch wiederum Verluste in der Qualität des aufgezeichneten kontinuierlichen Films mit sich bringen würde.

Grundsätzlich können die Zeitdaten beliebig codiert werden. Vorteilhaft ist es, wenn die Aufbereitungseinrichtung eingerichtet ist, die codierten Zeitdaten als kontinuierlichen Zeitdatenstream mit einem Frame für jedes Zeitdatum zu erzeugen. Anders ausgedrückt werden kontinuierlich Daten an die Kamera gesendet, welche jeweils ein Zeitdatum beinhalten. Dieses Zeitdatum wird dann mit dem kontinuierlichen Film aufgenommen und abgespeichert. Über einen Vergleich des auf dem Film aufgenommenen codierten Zeitdatums mit dem entsprechenden parallelen Zeitdatum aus der Einrichtung zur satellitenbasierten Positions- und Zeitbestimmung, welches ebenfalls auf der Speichereinheit gespeichert ist, kann so die exakte Position jedes Bildes des kontinuierlichen Films ermittelt werden.

Der kontinuierliche Film wird bevorzugt mit 24 Bildern pro Sekunde aufgenommen. Grundsätzlich können aber noch höhere Bildraten zum Beispiel mit 25, 30 oder auch 60 Bildern vorgesehen sein. Je mehr Bilder grundsätzlich aufgenommen werden, desto höher ist die Genauigkeit des später verorteten Straßenzugpanoramabildes.

Grundsätzlich können beliebige Codierungsverfahren zum Erzeugen der codierten Zeitdaten verwendet werden. Bevorzugt ist es, wenn jedoch die codierten Zeitdaten SMPTE-Itc-konform erzeugt werden. Hierbei handelt es sich um ein von der Society of Motion Pictures and Television Engineers eingeführten Zeitcode, welcher im Fernseh- und im Studiobereich zur Video- und Audio-Synchronisation verwendet wird. Standardgemäß weist die so codierte Zeit eine Information zur Stunde, Minute, Sekunde und dementsprechenden Frame des Films auf, wobei diese Information abhängig vom verwendeten Aufzeichnungsstandard ist.

Um eine noch bessere Genauigkeit zu erhalten, werden entsprechen der Erfindung Daten zu Milli- und Microsekunden als Userbitload in jenen Frame eingefügt. Diese bedeutet, dass zusätzliche zu den zuvor genannten Informationen der Stunde, Minute, Sekunde und dem Frame zusätzlich Informationen zur Millisekunde und Microsekunden in jedem Zeitdatum vorhanden sind.

Zum Erzeugen des Zeitsignals als Basis dieser Daten kann die Aufbereitungseinrichtung beispielsweise einen Quarz aufweisen, welcher durch ein Zeitsignal der Einrichtung zur satellitenbasierten Positions- und Zeitbestimmung justiert wird. Bei diesem Signal kann es sich beispielsweise um ein Sekundensignal handeln. Bekannterweise sind Quarze temperaturanfällig und weisen einen Drift auf, so dass es notwendig ist, das durch die Aufbereitungseinrichtung erzeugte Signal der codierten Zeitdaten immer wieder zu justieren. Hierfür kann beispielsweise entsprechend der Erfindung ein Zeitsignal der Einrichtung zur satellitenbasierten Positions- und Zeitbestimmung verwendet werden. Hierfür eignet sich das Sekundensignal.

Entsprechend der Erfindung ist beispielsweise vorgesehen, dass die Aufbereitungseinrichtung eingerichtet ist, zum Justieren der codierten Zeitdaten eine oder mehrere Frames des Zeitdatenstromes abzubrechen und/oder zu wiederholen, um die codierten Zeitdaten mittels des Zeitsignal der Einrichtung zur satellitenbasierten Positions- und Zeitbestimmung zu justieren.

Anders ausgedrückt, wird, wenn die Aufbereitungseinrichtung, basierend auf einem von der Einrichtung zur satellitenbasierten Positions- und Zeitbestimmung übertragenes Zeitsignal erkennt, dass ihr codiertes Zeitsignal hinter der Zeit ist, das momentane Erzeugen des Zeitdatenstreams abgebrochen und mit der richtigen Information fortgesetzt. Falls die Aufbereitungseinrichtung jedoch erkennt, dass sie zu schnell ist, also in der Zeit vor der Zeit ist, die von der Einrichtung zur satellitenbasierten Positions- und Zeitbestimmung angegeben wird, dann werden einzelne Frames oder Teile der Frames im Zeitdatenstream wiederholt, um so wieder zum richtigen Zeitpunkt justiert zu sein.

Eine höhere Datengenauigkeit zum Erstellen des verorteten Straßenzugpanoramabildes kann erreicht werden, wenn zusätzlich eine LIDAR-Sensoreinheit mit einem LIDAR-Sensor vorgesehen ist. Diese Einheit kann zum Empfangen von zumindest der Zeitdaten und/oder Positionsdaten der Einrichtung zur satellitenbasierten Positions- und Zeitbestimmung eingerichtet sein und gibt wiederum die mit dem LIDAR-Sensor ermittelten Abstandsdaten zusammen mit den Zeitdaten und/oder Positionsdaten aus, welche in der Speichereinheit gespeichert werden.

Hierbei liegt bei der anschließenden Erstellung des verorteten Straßenzugpanoramabildes eine weitere Information zur exakten Entfernung von der Kamera zum nächsten Objekt vor. Dies bietet eine weitere Datenbasis.

Ferner betrifft die Erfindung ein Verfahren zum Aufnehmen von Daten zum Erzeugen eines verorteten Straßenzugpanoramabildes mit einer Kamera und mit einer Einrichtung zur satellitenbasierten Positions- und Zeitbestimmung. Außerdem ist eine Aufbereitungseinrichtung vorgesehen, welche Zeitdaten der Einrichtung zur satellitenbasierten Positions- und Zeitbestimmung in ein für die Kamera aufnehmbares Format als codierte Zeitdaten aufbereitet und an die Kamera weiterleitet. In der Kamera wird ein kontinuierlicher Film zeitgleich mit den codierten Zeitdaten als Film mit Zeitdaten erzeugt und ausgegeben. Dieser so ausgegebene Film mit Zeitdaten kann in einer entsprechenden Einrichtung abgespeichert werden.

Mittels dieses Verfahrens ist es möglich, beim Abfahren eines Straßenzuges mit einem Fahrzeug einen kontinuierlichen Film zu erzeugen und in diesen Zeitdaten abzuspeichern. Wenn zusätzlich gleichzeitig Zeit- und Positionsdaten aus der Einrichtung zur satellitenbasierten Positions- und Zeitbestimmung abgespeichert werden, so können durch diese beiden Datensätze später bei einer Aufbereitung des verorteten Straßenzugpanoramabildes die genauen Positionen der im Film gezeigten Objekte beziehungsweise Bilder festgestellt werden.

Hierbei können die codierten Zeitdaten als akustisches Signal erzeugt werden und auf der Tonspur der Kamera aufgezeichnet werden. Dies bietet den Vorteil, dass keine zusätzlichen Daten, beispielsweise im Bildbereich der Kamera eingeblendet werden müssen. Auch ist es relativ leicht, die Tonspur zu verwenden, da diese bei den meisten Kameras standardmäßig vorhanden ist, jedoch für die Aufnahme des Straßenzuges nicht benötigt wird.

Die codierten Zeitdaten können als kontinuierlicher Zeitdatenstream mit einem Frame für jeweils ein Zeitdatum erzeugt werden. Auf diese Art wird auf der Kamera simultan die aktuelle Zeit mit aufgezeichnet, unabhängig davon, bei welchem Bildframe sich die Kameraaufnahme gerade befindet. Dies verbessert die spätere Positionsbestimmung der ermittelten Daten.

Bevorzugt sind die codierten Zeitdaten SMPTE-Itc-konform, wobei zusätzlich als Userbitload Daten zur Millisekunde und Microsekunde hinzugefügt werden können. So steht nicht nur, wie entsprechend dem LSMPTE-Itc-Standards als kleinste Einheit die Sekunde beziehungsweise der Bruchteil einer Sekunde entsprechend der Anzahl der verwendeten Frames, zur Verfügung, sondern über Milli- und Microsekunden kann eine noch höhere Genauigkeit erreicht werden.

Um die Genauigkeit weiter zu verbessern und insbesondere ein zu schnell oder zu langsames Laufen der durch die Aufbereitungseinrichtung erzeugten codierten Zeitdaten zu verhindern, können die codierten Zeitdaten mittels eines Zeitsignals, insbesondere eines Sekundensignals, der Einrichtung zur satellitenbasierten Positions- und Zeitbestimmung justiert werden. Hierbei können je nachdem, ob entsprechend der Aufbereitungseinrichtung die Zeit zu schnell oder zu langsam vergangen ist, eine oder mehrere Frames des Zeitdatenstreams abgebrochen oder wiederholt werden, um so wieder zu einer synchronen Zeit mit der Zeit der Einrichtung zur satellitenbasierten Positions- und Zeitbestimmung zu gelangen.

Abschließend kann aus dem kontinuierlichen Film mit den codierten Zeitdaten unter Verwendung der Positions- und Zeitdaten der Einrichtung zur satellitenbasierten Positions- und Zeitbestimmung ein verortetes Straßenzugpanoramabild erzeugt werden. Hierbei wird mittels der codierten Zeitdaten für jeden Frame des kontinuierlichen Films die exakte Aufnahmeposition bestimmt. Dies geschieht derart, dass das Zeitdatum zu jedem Frame bestimmt wird und anschließend mit den ebenfalls aufgezeichneten Daten der Einrichtung zur satellitenbasierten Positions- und Zeitbestimmung die entsprechende Position ermittelt wird. Dadurch, dass entsprechend der verwendeten Codierung sogar Microsekunden aufgezeichnet werden, ist so eine Positionsbestimmung bis auf wenige Zentimeter möglich.

Die Erfindung wird nachfolgend anhand eines schematischen Ausführungsbeispieles unter Bezugnahme auf die Figuren näher erläutert. Hierbei zeigen:
- Fig. 1: eine schematische Ansicht einer erfindungsgemäßen Vorrichtung zum Aufnehmen von Daten zum Erzeugen eines verorteten Straßenzugpanoramabildes;
- Fig. 2: die grundlegende Struktur eines Zeitdatenstreams entsprechend der Erfindung;
- Fig. 3: das Prinzip des Droppens eines Zeitdatenstream-Frames;
- Fig. 4: das Prinzip eines erneuten Sendens eines Zeitdaten-Frames; und
- Fig. 5: ein stark vereinfachtes Straßenzugpanoramabild.

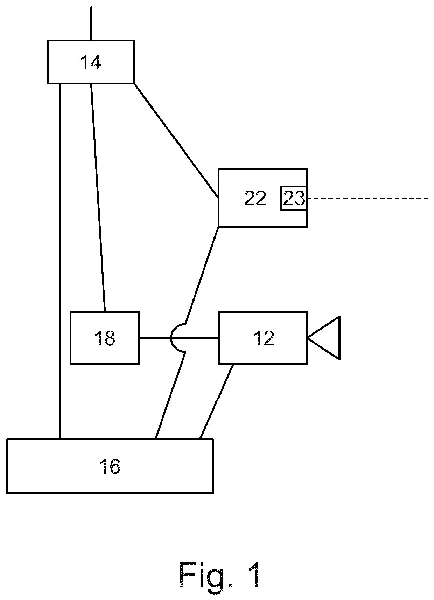

In Fig. 1 ist eine stark schematische, vereinfachte Darstellung einer erfindungsgemäßen Vorrichtung 10 zum Aufnehmen von Daten zum Erzeugen eines verorteten Straßenzugpanoramabildes 60 dargestellt.

Diese Vorrichtung 10 weist eine Kamera 12 und eine Einrichtung 14 zur satellitenbasierten Positions- und Zeitbestimmung auf. Bei der Einrichtung 14 zur satellitenbasierten Positions- und Zeitbestimmung handelt es sich beispielsweise um einen GPS-Empfänger. Beim GPS-Signal wird über verschiedene Satelliten ein hochgenaues Zeitsignal übertragen, aus dem danach im GPS-Gerät beziehungsweise GPS-Empfänger die entsprechende Position ermittelt werden kann.

Ferner ist bei der erfindungsgemäßen Vorrichtung 10 eine Aufbereitungseinrichtung 18 vorgesehen, auf die im Folgenden genauer eingegangen wird. Zusätzlich weist die erfindungsgemäße Vorrichtung 10 eine LIDAR-Sensoreinheit 22 mit einem LIDAR-Sensor 23 auf. Sowohl die Einrichtung 14 zur satellitenbasierten Positions- und Zeitbestimmung als auch die Kamera 12 und die LIDAR-Sensoreinheit 22 sind mit einer Speichereinrichtung 16 verbunden.

Im Folgenden wird genauer auf die Funktionsweise der erfindungsgemäßen Vorrichtung 10 eingegangen. Ziel ist es hierbei, mit der erfindungsgemäßen Vorrichtung 10 Daten zum Erzeugen eines verorteten Straßenpanoramabildes 60 aufzuzeichnen. Hierzu wird die erfindungsgemäße Vorrichtung 10 in ein Fahrzeug platziert, das sich auf einer Straße bewegt. Während der Fahrt des Fahrzeuges wird mittels der Kamera 12 ein Film aufgenommen. Zusätzlich zu den eigentlichen Bilddaten werden über die Einrichtung 14 zur satellitenbasierten Positions- und Zeitbestimmung Positions- und Zeitdaten ermittelt, welche mit dem Film ein Einklang gebracht werden sollen, damit diese Informationen beziehungsweise Daten, die auf der Speichereinheit 16 gespeichert werden, anschließend für ein verortetes Straßenpanoramabild 60 aufbereitet werden können.

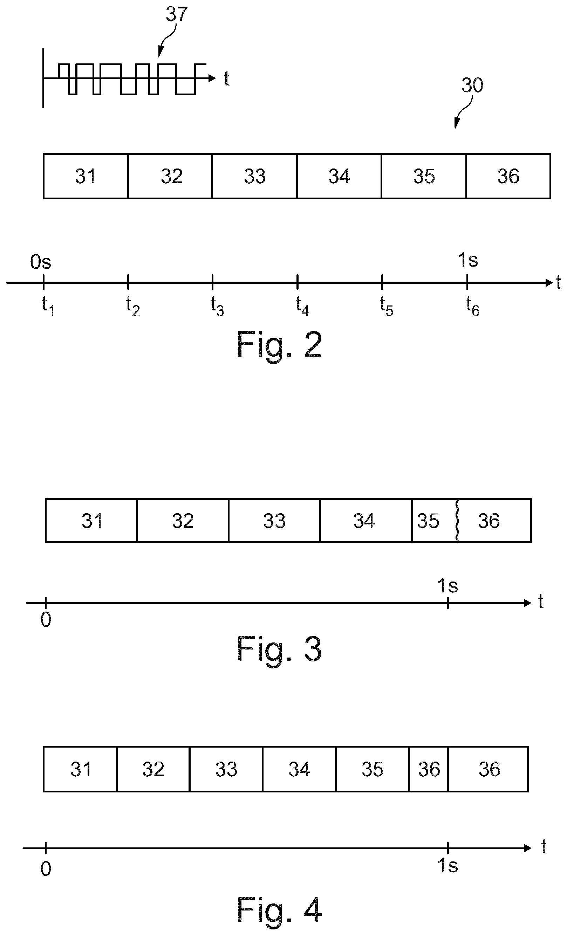

Zu diesem Zweck wird zumindest ein Zeitsignal von der Einrichtung 14 zur satellitenbasierten Positions- und Zeitbestimmung an die Aufbereitungseinrichtung 18 übertragen. In dieser wird das Zeitsignal in einen Zeitdatenstream umgewandelt, welcher wiederum als Audiostream vorliegt. Auf den genauen Aufbau dieses Audiostreams wird später mit Bezug auf die Figuren 2, 3 und 4 eingegangen.

Dieser Audiostream wird an die Kamera 12 an einen dort vorhandenen Audioeingang übertragen. In dem Audiostream befinden sich hochgenaue Informationen über die aktuelle Zeit. Die Kamera nimmt anschließend ihren Film auf, wobei die Audiodaten auf der Tonspur als akustisches Signal vorhanden sind. Dieser Film mit dem akustischen Signal wird anschließend auf der Speichereinheit 16 gespeichert. Hierbei kann es sich beispielsweise aus Datenschutzgründen um einen verschlüsselten Speicher beziehungsweise einen Server handeln, welche die Daten sofort verschlüsselt speichert, so dass sie nicht in Rohform vorliegen.

So ist es möglich, den genauen Zeitpunkt des Erzeugens des Films, das heißt eines Bildes des Films festzustellen und zu speichern.

Parallel hierzu wird die genaue Position wie auch die genaue Zeit von der Einrichtung 14 zur satellitenbasierten Positions- und Zeitbestimmung ebenfalls an die Speichereinheit 16 übertragen und dort abgespeichert.

Somit ist es bei einer nachgeschalteten Auswertung möglich, über den exakten Zeitcode auf dem Film und dem parallelen Zeitcode der Positionsdaten, die Position zu bestimmen, an der jedes entsprechende Bild des Films erzeugt wurde.

Zusätzlich weist die erfindungsgemäße Vorrichtung 10 in der dargestellten Ausführungsform die LIDAR-Sensoreinheit 22 mit einem LIDAR-Sensor 23 auf. Dies ist allerdings nicht zwingend erforderlich.

In der hier dargestellten Ausführungsform werden zumindest ebenfalls Zeitdaten von der Einrichtung 14 zur satellitenbasierten Positions- und Zeitbestimmung an die LIDAR-Sensoreinheit 22 übertragen. Die LIDAR-Sensoreinheit 22 bereitet diese Daten zusammen mit den durch den LIDAR-Sensor 23 ermittelten Abstand vom LIDAR-Sensor zum nächsten Objekt auf und speichert diese ebenfalls mittels der Speichereinheit 16 ab.

Grundsätzlich ist es aber auch möglich, nicht nur die Zeitdaten der Einrichtung 14 zur satellitenbasierten Positions- und Zeitbestimmung, sondern auch die Positionsdaten zu übertragen. In diesem Fall würden entweder nur die Positionsdaten mit den entsprechenden Abstandsdaten oder die Zeitdaten, die Positionsdaten und die Abstandsdaten von der LIDAR-Sensoreinheit 22 aufbereitet und in der Speichereinheit 16 abgespeichert. Diese Daten können analog zu den Filmdaten dann verwendet werden, um weitere Informationen für das Straßenzugpanoramabild zu erhalten. Auch sie sind hochgenau verortet, so dass die exakte Position bestimmt werden kann.

Im Folgenden wird der vereinfachte Aufbau des Zeitdatenstreams 30 mit Bezug auf Fig. 2 näher erläutert. Grundsätzlich stellt der Zeitdatenstream 30 ein Audiosignal dar, welches eine bit-Folge 37 codiert. Der Audiostream beziehungsweise Zeitdatenstream ist bevorzugt SMPTE-Itc-konform ausgelegt. Nach diesem Standard wird pro Frame 31, 32, 33, 34, 35, 36 jeweils ein bestimmter Zeitpunkt, also ein Zeitdatum, codiert. Der in Fig. 2 dargestellte vereinfachte Zeitdatenstream 30 weist nur fünf Frames pro Sekunde auf. Entsprechend diesem Standard wird in jedem Frame die aktuelle Stunde, Minute und Sekunde sowie der aktuelle Frame in Bezug auf die aufgenommenen Daten codiert. Bei einer Aufnahme mit 24 Bildern pro Sekunde bedeutet dies vereinfacht die Information, zu welchem Bild in der entsprechenden Sekunde der entsprechende Frame 31, 32, 33, 34, 35, 36 gehört.

Entsprechend der Erfindung wurde dieses Format dahingehend erweitert, dass in der nach dem Standard vorgesehenen Userbitload zusätzlich Daten zur Millisekunde und Microsekunde eingefügt werden.

Das entsprechende Zeitdatum, welche in jedem Frame 31, 32, 33, 34, 35, 36 codiert wird, entspricht immer dem Beginn des entsprechenden Frames t1, t2, t3, t4, t5, t6. Zur Vereinfachung wird angenommen, dass lediglich fünf Bilder pro Sekunde erzeugt werden, das heißt, dass fünf Frames in einer Sekunde vorhanden sind.

Die Aufbereitungseinrichtung 18 weist einen Quarz auf, um das hochgenaue Zeitsignal zu erzeugen, welches als Basis für den Zeitdatenstream 30 dient. Da Quarze und auch andere Zeitmesseinrichtungen oft temperaturabhängig sind, ist es notwendig, die Zeit jeweils zu justieren. Dies ist insbesondere in der hier vorgestellten Anwendung notwendig, da anderenfalls die hochgenaue Verortung der Bilder nicht erreicht werden kann. Zur Justierung wird beispielsweise das Zeitsignal aus der Einrichtung 14 zur satellitenbasierten Positions- und Zeitbestimmung verwendet. In diesem Fall wird hierfür ein Sekundensignal verwendet. Dies bedeutet, dass die Einrichtung 14 zur satellitenbasierten Positions- und Zeitbestimmung jede Sekunde ein Signal an die Aufbereitungseinrichtung 18 sendet. Mittels dieses Signals wird der Zeitdatenstream 30 dann jeweils neu justiert.

Im Folgenden werden in Fig. 3 und 4 die beiden Fälle beschrieben, in denen die Zeit auf der Aufbereitungseinrichtung 18 zu langsam oder zu schnell abläuft.

Entsprechend Fig. 3 ist hierbei die Zeit, welche von der Aufbereitungseinrichtung 18 berechnet wurde, zu langsam. Dies hat zur Folge, dass die Sekunde bereits vergangen ist, bevor der fünfte Frame 35 beendet ist. Entsprechend der Erfindung ist vorgesehen, dann die Übertragung dieses Frames 35 sofort abzubrechen und mit der Übertragung des nächsten richtigen Frames, also des Frames 36 zu beginnen.

In anderer Weise ist in Fig. 4 dargestellt, wenn die Aufbereitungseinrichtung 18 zu langsam läuft, das heißt eine zu langsame Zeit hat. In diesem Fall startet der Frame 36 bereits bevor die nächste Sekunde vergangen ist. Auch dies wird mittels dem von der Einrichtung 14 zur satellitenbasierten Positions- und Zeitbestimmung ausgesandte Sekundensignal erkannt. Dies hat zur Folge, dass wiederum die Übertragung des Frames 36 abgebrochen wird, jedoch dann entsprechend neu gestartet wird, so dass der Zeitdatenstream 30 wieder synchron zur Zeit der Einrichtung 14 zur satellitenbasierten Positions- und Zeitbestimmung abläuft.

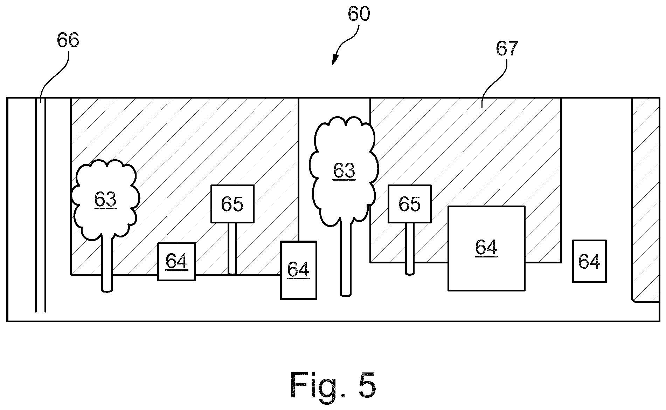

Abschließend wird in Fig. 5 ein stark schematisiertes Beispiel für ein erzeugtes Straßenzugpanorama 60 dargestellt. Bei einer Aufbereitung der Daten werden, die mittels der Kamera 20 erzeugten kontinuierlichen Filmdaten aufbereitet und zu einem Straßenzugpanoramabild 60, welches möglichst keine oder kaum optische Verzerrungen aufweist, zusammengesetzt. Auf dem Straßenzugpanoramabild 60 können dann einzelne Objekte 64 wie Autos oder Lkws, die sich auf Parkplätzen befinden, aber auch Schilder 65 erkannt werden. Auf diesen Schildern 65 können beispielsweise Parkinformationen vorhanden sein. Auch werden beispielsweise komplette beziehungsweise Ausschnitte von Laternen 66 dargestellt. Wesentlich hierbei ist es, dass der Straßenrand vorhanden ist, um ausreichend Daten für statische Informationen für das Parkmanagementsystem zu ermitteln. Bei den in Fig. 5 schraffiert dargestellten Objekten handelt es sich beispielsweise um im Hintergrund befindliche Häuser 67.

Mit der erfindungsgemäßen Vorrichtung nach dem erfindungsgemäßen Verfahren ist es somit möglich, in effizienter Weise Daten zu erzeugen, welche zum Erstellen eines verorteten Straßenzugpanoramabildes verwendet werden können.

## Patentansprüche

1. Vorrichtung (10) zum Aufnehmen von Daten zum Erzeugen eines verorteten Straßenzugpanoramabildes
mit einer Kamera (20),
mit einer Einrichtung (14) zur satellitenbasierten Positions- und Zeitbestimmung, mit einer Speichereinheit (16),
**dadurch gekennzeichnet,**
**dass** eine Aufbereitungseinrichtung (18) vorgesehen ist, welche ausgebildet ist, Zeitdaten der Einrichtung (14) zur satellitenbasierten Positions- und Zeitbestimmung in ein für die Kamera (20) aufnehmbares Format als codierte Zeitdaten als akustisches Signal aufzubereiten und der Kamera (20) zur Aufnahme weiterzuleiten,
**dass** die Kamera (20) zum zeitgleichen Aufnehmen eines kontinuierlichen bildlichen Films und der codierten Zeitdaten als akustisches Signal als Film mit Zeitdaten ausgebildet ist,
**dass** die Speichereinheit (16) zum Abspeichern des Films mit codierten Zeitdaten ausgebildet und eingerichtet ist und
**dass** die Speichereinheit (16) zum Abspeichern von Positions- und Zeitdaten der Einrichtung (14) zur satellitenbasierten Positions- und Zeitbestimmung ausgebildet und eingerichtet ist,
**dass** die Aufbereitungseinrichtung (18) eingerichtet ist, die codierten Zeitdaten SMPTE Itc-konform unter Einfügen von Daten zur Millisekunde und Mikrosekunde als Userbitload zu erzeugen.

2. Vorrichtung (10) nach Anspruch 1,
**dadurch gekennzeichnet, dass** die Aufbereitungseinrichtung (18) eingerichtet ist, die codierten Zeitdaten als kontinuierlichen Zeitdaten-Stream mit einem Frame für jedes Zeitdatum zu erzeugen.

3. Vorrichtung (10) nach einem der Ansprüche 1 oder 2,
**dadurch gekennzeichnet,**
**dass** die Aufbereitungseinrichtung (18) eingerichtet ist, die codierten Zeitdaten mittels eines Zeitsignals, insbesondere eines Sekundensignals, der Einrichtung (14) zur satellitenbasierten Positions- und Zeitbestimmung zu justieren.

4. Vorrichtung (10) nach einem der Ansprüche 2 bis 3,
**dadurch gekennzeichnet,**
**dass** die Aufbereitungseinrichtung (18) eingerichtet ist, zum Justieren der codierten Zeitdaten einen oder mehrere Frames abzubrechen und/oder zu wiederholen, um die codierten Zeitdaten mittels des Zeitsignals der Einrichtung 14 zur satellitenbasierten Positions- und Zeitbestimmung zu justieren.

5. Vorrichtung (10) nach einem der Ansprüche 1 bis 4,
**dadurch gekennzeichnet,**
**dass** eine LIDAR-Sensoreinheit (22) mit einem LIDAR-Sensor (23) vorgesehen ist, welche zum Empfangen von Positions- und/oder Zeitdaten von der Einrichtung (14) zur satellitenbasierten Positions- und Zeitbestimmung ausgebildet ist und welche eingerichtet ist, Abstandsdaten des LIDAR-Sensors (23) mit Positions- und Zeitdaten der Einrichtung (14) zur satellitenbasierten Positions- und Zeitbestimmung zu übermitteln.

6. Verfahren zum Aufnehmen von Daten zum Erzeugen eines verorteten Straßenzugpanoramabildes,
mit einer Kamera (12),
mit einer Einrichtung (14) zur satellitenbasierten Positions- und Zeitbestimmung, und
mit einer Aufbereitungseinrichtung (18),
wobei die Aufbereitungseinrichtung Zeitdaten der Einrichtung (14) zur satellitenbasierten Positions- und Zeitbestimmung in ein für die Kamera (20) aufnehmbares Format als akustisches Signal als codierte Zeitdaten aufbereitet und an die Kamera (20) weiterleitet,
wobei die Kamera (20) einen kontinuierlichen bildlichen Film zeitgleich mit den codierten Zeitdaten als akustisches Signal als Film mit Zeitdaten erzeugt und ausgibt,
dass die codierten Zeitdaten SMPTE Itc-konform sind und
dass als Userbitload Daten zur Millisekunde und Mikrosekunde eingefügt werden.

7. Verfahren nach Anspruch 6,
**dadurch gekennzeichnet,**
**dass** die codierten Zeitdaten als kontinuierlicher Zeitdaten-Stream mit einem Frame für jeweils ein Zeitdatum erzeugt werden.

8. Verfahren nach einem der Ansprüche 6 oder 7
**dadurch gekennzeichnet,**
**dass** die codierten Zeitdaten mittels eines Zeitsignals, insbesondere eines Sekunden-Signals, der Einrichtung (14) zur satellitenbasierten Positions- und Zeitbestimmung justiert werden.

9. Verfahren nach einem der Ansprüche 6 bis 8,
**dadurch gekennzeichnet,**
**dass** zum Justieren der codierten Zeitdaten ein oder mehrere Frames abgebrochen und/oder wiederholt werden.

10. Verfahren nach einem der Ansprüche 6 bis 9,
**dadurch gekennzeichnet,**
**dass** aus dem kontinuierlichen Film mit den codierten Zeitdaten unter Verwendung der Positions- und Zeitdaten der Einrichtung (14) zur satellitenbasierten Positions- und Zeitbestimmung ein verortetes Straßenzugpanoramabild erzeugt wird.

## Claims

1. Apparatus (10) for recording data to produce a localized panoramic image of a street
with a camera (12),
with a device (14) for satellite-based position and time determination,
with a storage unit (16),
**characterized in that**
a preparation device (18) is provided which is designed to prepare time data of the device (14) for satellite-based position and time determination into a format recordable for the camera (12) as coded time data as an acoustic signal and to forward this to the camera (12) for recording,
**in that** the camera (12) is designed to simultaneously record a continuous figuratively film and the coded time data as an acoustic signal as a film with time data,
**in that** the storage unit (16) is designed and configured to store the film with coded time data and
**in that** the storage unit (16) is designed and configured to store position and time data of the device (14) for satellite-based position and time determination,
**in that** the preparation device (18) is set up to generate the coded time data in a SMPTE Itc compliant manner whilst inserting data on the millisecond and microsecond as user bit load.

2. Apparatus (10) according to claim 1,
**characterized in that**
the preparation device (18) is configured to produce the coded time data as a continuous time data stream with a frame for each time-stamp.

3. Apparatus (10) according to any one of claims 1 or 2,
**characterized in that**
the preparation device (18) is configured to adjust the coded time data by means of a time signal, in particular a seconds signal, of the device (14) for satellite-based position and time determination.

4. Apparatus (10) according to any one of claims 2 to 3,
**characterized in that**
for adjustment of the coded time data the preparation device (18) is configured to stop and/or repeat one or several frames in order to adjust the coded time data by means of the time signal of the device (14) for satellite-based position and time determination.

5. Apparatus (10) according to any one of claims 1 to 4,
**characterized in that**
a LIDAR sensor unit (22) with a LIDAR sensor (23) is provided which is designed to receive position and/or time data from the device (14) for satellite-based position and time determination and which is configured to transmit distance data of the LIDAR sensor (23) together with position and time data of the device (14) for satellite-based position and time determination.

6. Method for recording data to produce a localized panoramic image of a street with a camera (12),
with a device (14) for satellite-based position and time determination
and
with a preparation device (18),
wherein the preparation device prepares time data of the device (14) for satellite-based position and time determination into a format recordable for the camera (12) as an acoustic signal as coded time data and forwards this to the camera (12),
wherein the camera (12) produces and issues a continuous figuratively film simultaneously with the coded time data as an acoustic signal as a film with time data,
in that the coded time data are SMPTE Itc-compliant and
in that as user bit load data on the millisecond and microsecond are inserted.

7. Method according to claim 6,
**characterized in that**
the coded time data are produced as a continuous time data stream with a frame for one time-stamp in each case.

8. Method according to any one of claims 6or7,
**characterized in that**
the coded time data are adjusted by means of a time signal, in particular a seconds signal, of the device (14) for satellite-based position and time determination.

9. Method according to any one of claims 6 to 8,
**characterized in that**
for adjustment of the coded time data one or several frames are stopped and/or repeated.

10. Method according to any one of claims 6 to 9,
**characterized in that**
a localized panoramic image of a street is produced from the continuous film with the coded time data whilst using the position and time data of the device (14) for satellite-based position and time determination.

## Revendications

1. Dispositif (10) destiné à l'acquisition de données pour la génération d'une image panoramique géoréférencée d'un tronçon de rue,
comprenant une caméra (20),
comprenant un dispositif (14) de détermination de position et de temps par satellite, comprenant une unité de stockage (16),
**caractérisé en ce que**
un dispositif de traitement (18) est prévu, lequel est conçu pour convertir des données temporelles du dispositif (14) de détermination de position et de temps par satellite en un format pouvant être enregistré par la caméra (20), sous forme de données temporelles codées en tant que signal acoustique, et pour les transmettre à la caméra (20) en vue de leur enregistrement,
**en ce que** la caméra (20) est conçue pour enregistrer simultanément un film visuel continu et les données temporelles codées en tant que signal acoustique sous la forme d'un film avec données temporelles,
**en ce que** l'unité de stockage (16) est conçue et agencée pour mémoriser le film avec les données temporelles codées et
**en ce que** l'unité de stockage (16) est conçue et agencée pour mémoriser les données de position et de temps du dispositif (14) de détermination de position et de temps par satellite,
**en ce que** le dispositif de traitement (18) est agencé pour générer les données temporelles codées conformément au SMPTE LTC en insérant, en tant que charge utile de bits utilisateur, des données relatives à la milliseconde et à la microseconde.

2. Dispositif (10) selon la revendication 1,
**caractérisé en ce que**
le dispositif de traitement (18) est agencé pour générer les données temporelles codées sous la forme d'un flux continu de données temporelles comportant une trame pour chaque donnée temporelle.

3. Dispositif (10) selon l'une des revendications 1 ou 2,
**caractérisé en ce que**
le dispositif de traitement (18) est agencé pour ajuster les données temporelles codées au moyen d'un signal temporel, notamment d'un signal de seconde, du dispositif (14) de détermination de position et de temps par satellite.

4. Dispositif (10) selon l'une des revendications 2 à 3,
**caractérisé en ce que**
le dispositif de traitement (18) est agencé, pour ajuster les données temporelles codées, à interrompre et/ou à répéter une ou plusieurs trames afin d'ajuster les données temporelles codées au moyen du signal temporel du dispositif 14 de détermination de position et de temps par satellite.

5. Dispositif (10) selon l'une des revendications 1 à 4,
**caractérisé en ce que**
une unité de capteur LIDAR (22) comportant un capteur LIDAR (23) est prévue, laquelle est conçue pour recevoir des données de position et/ou de temps du dispositif (14) de détermination de position et de temps par satellite et laquelle est agencée pour transmettre des données de distance du capteur LIDAR (23) avec des données de position et de temps du dispositif (14) de déterminination de position et de temps par satellite.

6. Procédé d'acquisition de données pour la génération d'une image panoramique géoréférencée d'un tronçon de rue,
avec une caméra (12),
avec un dispositif (14) de détermination de position et de temps par satellite, et avec un dispositif de traitement (18),
le dispositif de traitement convertissant des données temporelles du dispositif (14) de détermination de position et de temps par satellite en un format pouvant être enregistré par la caméra (20), sous forme de signal acoustique en tant que données temporelles codées, et les transmettant à la caméra (20),
la caméra (20) produisant et délivrant un film visuel continu simultanément avec les données temporelles codées en tant que signal acoustique sous la forme d'un film avec données temporelles,
les données temporelles codées étant conformes au SMPTE LTC et
des données relatives à la milliseconde et à la microseconde étant insérées en tant que charge utile de bits utilisateur.

7. Procédé selon la revendication 6,
**caractérisé en ce que**
les données temporelles codées sont générées sous la forme d'un flux continu de données temporelles comportant une trame pour chaque donnée temporelle.

8. Procédé selon l'une des revendications 6 ou 7,
**caractérisé en ce que**
les données temporelles codées sont ajustées au moyen d'un signal temporel, notamment d'un signal de seconde, du dispositif (14) de détermination de position et de temps par satellite.

9. Procédé selon l'une des revendications 6 à 8,
**caractérisé en ce que**
pour ajuster les données temporelles codées, une ou plusieurs trames sont interrompues et/ou répétées.

10. Procédé selon l'une des revendications 6 à 9,
**caractérisé en ce que**
une image panoramique géoréférencée d'un tronçon de rue est générée à partir du film continu avec les données temporelles codées en utilisant les données de position et de temps du dispositif (14) de détermination de position et de temps par satellite.
